# EUROPÄISCHE PATENTSCHRIFT

(11) **EP 1 626 209 B1**
(45) Veröffentlichungstag und Bekanntmachung des Hinweises auf die Patenterteilung: **10.10.2012**
(21) Anmeldenummer: 04103822.5
(22) Anmeldetag: 09.08.2004
(51) Int. Cl.: F16H 63/36

(54) **Schalteinrichtung mit Rastmechanismus und Sperre**
Shifting device with detent and interlock
Commande interne des boîtes de vitesses avec dispositif de billage et de verrouillage

(43) Veröffentlichungstag der Anmeldung: 15.02.2006
(73) Patentinhaber: Getrag Ford Transmissions GmbH, 50725 Köln (DE)
(72) Erfinder: Schwekutsch, Michael, 45711, Datteln (DE)

(56) Entgegenhaltungen:
- EP-A- 0 748 966
- DE-C- 867 337
- DE-U- 8 122 318
- FR-A- 2 780 475
- GB-A- 866 860
- GB-A- 191 109 947
- US-A- 2 350 506

## Beschreibung

Die Erfindung betrifft eine Schalteinrichtung für ein mehrgängiges Zahnräderwechselgetriebe eines Kraftfahrzeugs, wobei die Schalteinrichtung eine erste Schaltgabel mit einem ersten Rastmechanismus und wenigstens eine zweite Schaltgabel mit einem zweiten Rastmechanismus umfasst.

Eine derartige Schalteinrichtung ist beispielsweise aus der DE 100 55 593 A1 bekannt. Die dort offenbarte Schalteinrichtung weist drei Schaltgabeln auf, die jeweils eine längs verschiebbare Schaltstange aufweisen. In jeweils eine Schaltstange ist eine Rastkontur eingebracht, die mit einer Feder beaufschlagten Rastkugel zusammenwirkt. Rastkontur und Rastkugel bewirken, dass die jeweilige Schaltgabel in eine jeweilige Neutralstellung gezogen wird und in dieser gehalten wird. Somit wird ein Wandern der Gabel aus der Neutralposition heraus verhindert und gleichzeitig ein gewisser Einzugseffekt in die Neutralstellung gewährt.

Durch Auslenken einer Schaltgabel aus ihrer Neutralposition heraus lässt sich über eine Schiebemuffe ein Zahnrad des Getriebes drehfest mit einer Welle verbinden, so dass dadurch ein Gang des Getriebes eingelegt wird.

Um zu verhindern, dass zwei Gänge gleichzeitig eingelegt sind, ist aus der DE 42 07 267 eine Anordnung von mehreren parallelen, axial an sich verschiebbaren Schaltstangen bekannt, bei welcher durch Verschieben einer der Schaltstangen aus der Neutralstellung heraus alle übrigen Schaltstangen gegenüber einem Getriebegehäuse unbeweglich festgelegt werden. Dabei ist jeder der parallelen Schaltstangen ein Sperrglied zugeordnet, das mit einem der Schaltstangen abgewandten Ende in eine Führungsbahn ragt, die sich quer zu den Schaltstangen erstreckt. Wird eine Schaltstange aus ihrer Neutralstellung heraus bewegt, fährt das ihr zugeordnete Sperrglied mit dem der Schaltstangen abgewandten Ende weiter in die Führungsbahn hinein. Dadurch werden Zwischensperrglieder, die sich in der Führungsbahn befinden, derart verschoben, dass sie ein gleichzeitiges Einfahren der Sperrglieder der anderen Schaltstangen in die Führungsbahn verhindern. Dies führt wiederum dazu, dass die beiden anderen Schaltstangen aufgrund der nun gesperrten Sperrglieder nicht mehr bewegt werden können.

Durch die in der DE 42 07 267 offenbarten Anordnung wird daher sicher vermieden, dass sich zwei Schaltstangen gleichzeitig außerhalb ihrer Neutralstellung befinden. Jedoch ist die Anordnung mit den Sperrgliedern, den Zwischensperrgliedern und der quer zu den Schaltstangen verlaufenden Führungsbahn vergleichsweise aufwendig. Darüber hinaus wird die Sperrwirkung nur für parallel verlaufende Schaltstangen beschrieben. Eine Rastwirkung, durch die die Schaltstangen in einer bestimmten Position durch eine gewisse Kraft gehalten werden beziehungsweise in diese gezogen werden, wird durch die offenbarte Anordnung von Schaltstange, Sperrglied, Zwischensperrglied und Führungsbahn nicht erreicht.

Aus der EP 0748966 A , welcher die Merkmale des Oberbegriffs des I. Anspruchs offenbart, und GB 09947 ist bekannt, dass zwischen dem Rastelement des ersten Rastmechanismus und dem Rastelement des zweiten Rastmechanismus eine Sperre angeordnet ist, die die erste Schaltgabel über das erste Rastelement in ihrer Neutralstellung fixiert, wenn die zweite Schaltgabel um einen bestimmten Verschiebeweg aus ihrer Neutralstellung herausbewegt worden ist. Durch die Sperre, die zwischen dem ersten Rastelement und dem zweiten Rastelement wirkt, stellen der erste und der zweite Rastmechanismus neben ihrer Aufgabe, die Schaltstangen in ihrer jeweiligen Neutralstellung einrasten zu lassen, sicher, dass sich nur höchstens eine Schaltgabel außerhalb ihrer Neutralstellung befinden kann.

Der Erfindung liegt daher die Aufgabe zugrunde, eine einfach aufgebaute Schaltvorrichtung bereitzustellen, die einerseits einen Rastmechanismus zum Einzug und Festhalten einer Schaltgabel in ihrer Neutralstellung aufweist und andererseits sicher verhindert, dass zwei Gänge gleichzeitig eingelegt werden können.

Die Rastkontur des zweiten Rastmechanismus ist erfindungsgemäß so bemessen, dass ab einem bestimmten Verschiebeweg die zwischen den beiden Rastelementen angeordnete Feder auf Blocklänge zusammengedrückt worden ist. Soll nun die erste Schaltgabel aus ihrer Neutralstellung bewegt werden, müsste aufgrund der Rastkontur des ersten Rastmechanismus die vorzugsweise als Schraubenfeder ausgeführte Feder weiter zusammengedrückt werden, was jedoch aufgrund der auf Blocklänge zusammengedrückten Schraubenfeder nicht mehr möglich ist. Die Sperre wird daher durch die Schraubenfeder selbst gebildet, wenn diese ihre Blocklänge einnimmt.

In einem bevorzugten Ausführungsbeispiel hängt eine Neutralhaltekraft, mit der die erste Schaltgabel in ihrer Neutralstellung gehalten wird, von der Position der zweiten Schaltgabel ab. Die Abhängigkeit der Neutralhaltekraft von der Position der zweiten Schaltgabel wird in erster Linie durch die Form der Rastkontur des zweiten Rastmechanismus beeinflusst. Zweckmäßigerweise wird die auf die erste Schaltgabel wirkende Neutralhaltekraft erhöht, wenn die zweite Schaltgabel aus ihrer Neutralstellung heraus bewegt wird. Diese Neutralhaltekraft kann in einem Anfangsbereich des Verschiebeweges von der Kraft der Feder abhängen, die das erste Rastelement gegen die Rastkontur des ersten Rastmechanismus drückt. In einem sich dem Anfangsbereich anschließenden Bereich des Verschiebeweges wirkt dann die Sperre, so dass aufgrund eines dann auftretenden Formschlusses die Neutralhaltekraft theoretisch unendlich groß wird.

Wie oben bereits ausgeführt, ist vorzugsweise die Feder als Schraubenfeder ausgebildet. Dabei ist das Rastelement an einem Stirnende der Schraubenfeder angeordnet. An dem anderen Stirnende der Schraubenfeder kann das Rastelement des anderen Rastmechanismus angeordnet sein. Wird die zweite Schaltgabel aus ihrer Neutralstellung heraus verschoben, wird aufgrund der Rastkontur das Ratelement des zweiten Rastmechanismus entlang der Längsachse der Schraubenfeder in Richtung des Rastelements des ersten Rastmechanismus verschoben, so dass durch die zusammengedrückte Schraubenfeder zwischen den Rastelementen die Neutralhaltekraft für die erste Schaltgabel ansteigt.

Vorzugsweise kann zwischen dem Rastelement und der Feder ein Gleitschuh angeordnet sein, an dem sich das Rastelement abstützt. Im Vergleich zu einem Ausführungsbeispiel, bei dem sich das Rastelement, das als Rastkugel ausgebildet sein kann, direkt an einem Stirnende der Feder abstützt, kann das Rastelement auf der Rastkontur leichter abrollen, da es zu einem kontrollierten Gleiten zwischen Rastelement und Gleitschuh kommt.

Vorzugsweise umfasst der erste und/oder der zweite Rastmechanismus ein Gehäuse mit einer Halterung, die das Rastelement in dem Gehäuse hält. Das an beispielsweise an einer Getriebewand ortsfest angebrachte Gehäuse kann eine zylindrische Form ausweisen, wobei der Zylinderdurchmesser etwas größer ist als der Durchmesser des als Rastkugel ausgebildeten Rastelements. An einem der Rastkugel zugeordneten Stirnende ist der Durchmesser beispielsweise durch eine Verstemmung verjüngt, so dass die Rastkugel an diesem Stirnende nicht aus dem Gehäuse fallen kann.

Vorzugsweise sind das Gehäuse des ersten Rastmechanismus und das Gehäuse des zweiten Rastmechanismus als einstückiges Gehäuse ausgebildet. Somit beinhaltet ein Gehäuse die Rastelemente beider Rastmechanismen sowie die zwischen den Rastelementen angeordnete Feder. Das Gehäuse kann wiederum zylindrisch sein, wobei an den beiden Stirnenden des Gehäuses der Durchmesser leicht verjüngt ist.

In einem nicht von der Erfindung erfassten Ausführungsbeispiel umfasst die Sperre wenigstens ein Sperrelement, das an dem Rastelement des ersten Rastmechanismus formschlüssig anliegt, wenn die zweite Schaltgabel um einen bestimmten Verschiebeweg von ihrer Neutralstellung heraus bewegt worden ist. Beispielsweise kann das Sperrelement mit einem Ende an dem Rastelement des ersten Rastmechanismus und mit einem anderen Ende an dem Rastelement des zweiten Rastmechanismus anliegen. Dabei kann das Sperrelement zwischen den Rastelementen als Sperrstift ausgebildet sein, der koaxial zur Schraubenfeder innerhalb ihrer Windungen angeordnet ist. Alternativ kann das Sperrelement auch als Sperrhülse ausgebildet sein, die ebenfalls koaxial zur Schraubenfeder angeordnet ist, aber über ihre Windungen gesteckt wird. Die Länge der Sperrhülse bzw. des Sperrstiftes definiert dabei den minimalen Abstand zwischen den Rastelementen des ersten und zweiten Rastmechanismus. Vorzugsweise ist der minimale Abstand dann gegeben, wenn durch die zweite Schaltgabel ein Gang eingelegt ist und sich die erste Schaltgabel weiterhin in ihrer Neutralstellung befindet. Auch kann die Sperrhülse oder der Sperrstift einstückig an dem Gleitschuh angeformt sein. Somit ermöglicht oder fördert der Gleitschuh einerseits ein Abrollen des Rastelements auf der Rastkontur und sorgt andererseits für die Sperrwirkung, so dass die erste Schaltgabel aus ihrer Neutralstellung nicht bewegt werden kann, wenn die zweite Schaltgabel um einen bestimmten Verschiebeweg verschoben ist.

In einem weiteren, nicht von der Erfindung erfassten Ausführungsbeispiel ist ein dem ersten Rastmechanismus zugeordnetes erstes Sperrelement und ein dem zweiten Rastmechanismus zugeordnetes zweites Sperrelement über eine Druckübertragungsvorrichtung miteinander verbunden, wobei erster und zweiter Rastmechanismus räumlich voneinander getrennt sind. Diese Druckübertragungsvorrichtung kann vorzugsweise ein Bodenzug, eine Hydraulikleitung oder ein Hebelsystem sein. Wird beispielsweise die zweite Schaltgabel aus ihrer Neutralstellung heraus bewegt, drückt das entsprechende Rastelement aufgrund der Rastkontur das zweite Sperrelement gegen die Druckübertragungsvorrichtung, die den ausgeübten Druck auf das erste Sperrelement überträgt. Das erste Sperrelement drückt dann das Rastelement des ersten Sperrmechanismus gegen die Rastkontur der ersten Schaltgabel, wodurch die Position der ersten Schaltgabel fixiert ist. Durch die Druckübertragungsvorrichtung können die erste Schaltgabel und die zweite Schaltgabel beliebig im Raum angeordnet sein. Vorzugsweise ist dabei eine dem ersten Rastmechanismus zugeordnete erste Feder und eine dem zweiten Rastmechanismus zugeordnete zweite Feder über die Druckübertragungsvorrichtung miteinander verbunden. Somit sind die erste und die zweite Feder in Reihe geschaltet, so dass, wenn beispielsweise die zweite Schaltgabel aus ihrer Neutralstellung heraus bewegt wird, die Neutralhaltekraft der ersten Schaltgaben ansteigt.

Das beschriebene Zusammenspiel zwischen der ersten und zweiten Schaltgabel bzw. zwischen dem ersten und zweiten Rastmechanismus gilt immer auch im umgekehrten Sinne. Die Zuordnung "erster" und "zweite" ist daher beliebig. Wenn die Schalteinrichtung noch eine weitere, also eine dritte Schaltgabel mit einem dritten Rastmechanismus aufweist, so soll beispielsweise eine Bewegung der ersten und zweiten Schaltgabel aus ihren jeweiligen Neutralstellungen nicht möglich sein, wenn die dritte Schaltgabel um einem bestimmten Verschiebeweg aus ihrer Neutralstellung bewegt worden ist. Der Begriff "Verschiebeweg" ist zudem allgemein als Auslenkung von einer Neutralstellung zu verstehen, umfasst daher auch andersartige Bewegungen der Schaltgabel.

Anhand der in den Figuren dargestellten Vorrichtungen wird die Erfindung näher beschrieben, wobei die Beschreibung auch auf nicht-erfindungsgemäße Ausführungen eingehet. Es zeigen:
- Figur 1: eine erste Schaltgabel mit einem ersten Rastmechanismus und eine zweite Schaltgabel mit einem zweiten Rastmechanismus;
- Figur 2: die Schaltgabeln der Figur 1, wobei eine der Schaltgabeln gegenüber der in Figur 1 gezeigten Stellung verschoben ist;
- Figur 3: den ersten und zweiten Rastmechanismus mit zwei Gleitschuhen,
- Figur 4: den ersten und zweiten Rastmechanismus ohne Sperrstift und Gleitschuh;
- Figur 5: den ersten und zweiten Rastmechanismus mit Sperrhülse;
- Figur 6: den ersten und zweiten Rastmechanismus mit zwei Sperrstiften und dazwischen angeordnetem Bowdenzug;
- Figur 7: den ersten und zweiten Rastmechanismus mit zwei Sperrstiften und dazwischen angeordneter Hydraulikleitung;
- Figur 8: den ersten und zweiten Rastmechanismus mit zwei Sperrstiften und dazwischen angeordnetem Hebelsystem; und
- Figur 9: eine zur Figur 7 modifizierte Vorrichtung mit Hydraulikleitung.

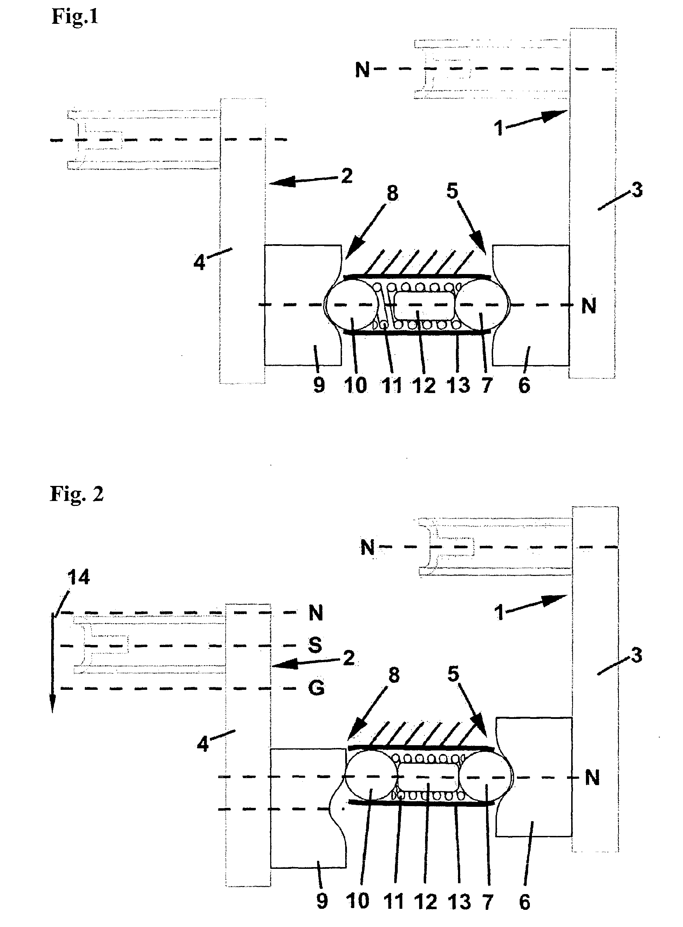

Figur 1 zeigt eine Schalteinrichtung mit einer ersten Schaltgabel 1 und einer zweiten Schaltgabel 2, die eine Schaltstange 3 bzw. eine Schaltstange 4 umfassen. Der ersten Schaltgabel 1 ist ein erster Rastmechanismus 5 zugeordnet, der eine Rastkontur 6 und eine als Rastkugel ausgebildetes Rastelement 7 umfasst. Der zweiten Schaltgabel 2 ist ein zweiter Rastmechanismus 8 mit einer Rastkontur 9 und mit einem als Rastkugel ausgebildeten Rastelement 10 zugeordnet. Zwischen den Rastkugeln 7 und 10 ist eine als Schraubenfeder ausgebildete Feder 11 angeordnet, deren einzelne Windungen im Schnitt dargestellt sind. Innerhalb der Schraubenfeder 11 befindet sich ein Sperrstift 12.

Die beiden Rastkugeln 7 und 10, die Feder 11 sowie der Sperrstift 12 sind in einem zylindrischen Gehäuse 13 angeordnet, das gegenüber den verschiebbaren Schaltgabeln 1 und 2 ortsfest, beispielsweise an einer hier nicht dargestellten Getriebewand, befestigt ist. Der Durchmesser des zylindrischen Gehäuses 13 ist an seinen beiden Stirnenden leicht verjüngt, so dass die Rastkugeln 7, 10 nicht aus dem Gehäuse 13 fallen können.

Die Figur 1 zeigt die erste Schaltgabel 1 und die zweite Schaltgabel 2 jeweils in ihrer Neutralstellung, die mit dem Buchstaben N gekennzeichnet ist. Figur 2 zeigt die Schaltgabeln der Figur 1, wobei die zweite Schaltgabel 2 in Richtung des Pfeils 14 aus ihrer Neutralstellung N in einen sogenannten Synchronpunkt S verschoben worden ist, in dem mittels einer durch die zweite Schaltgabel 2 geführten Schiebemuffe die Drehzahl eines Losrads mit einer Getriebewelle (nicht dargestellt) synchronisiert wird. Wird die Schaltgabel 2 weiter in die Stellung G verschoben, so ist ein entsprechender Gang eingelegt worden.

Aufgrund der Verschiebung wird die Rastkugel 10, die der Rastkontur 9 des zweiten Rastmechanismus 8 folgt, in das Gehäuse 13 geschoben, wodurch die Feder 11 zusammengedrückt wird. Die Rastkonturen 6, 9 sowie der Abstand zwischen der ersten Schaltgabel 1 und der zweiten Schaltgabel 2 sind so bemessen, dass in der Figur 2 gezeigten Position der zweiten Schaltgabel 2 die Rastkugeln 7, 10 ohne Spiel an dem Sperrstift 12 anliegen. Aufgrund dessen ist eine Verschiebung der ersten Schaltgabel 1 entlang der Längsachse der Schaltstange 3 nicht möglich; die erste Schaltgabel 1 ist in ihrer Neutralstellung N fixiert. Mit anderen Worten: Beim Synchronpunkt S der zweiten Schaltgabel 2 ist ein Einlegen eines anderen Ganges durch die erste Schaltgabel 1 nicht möglich.

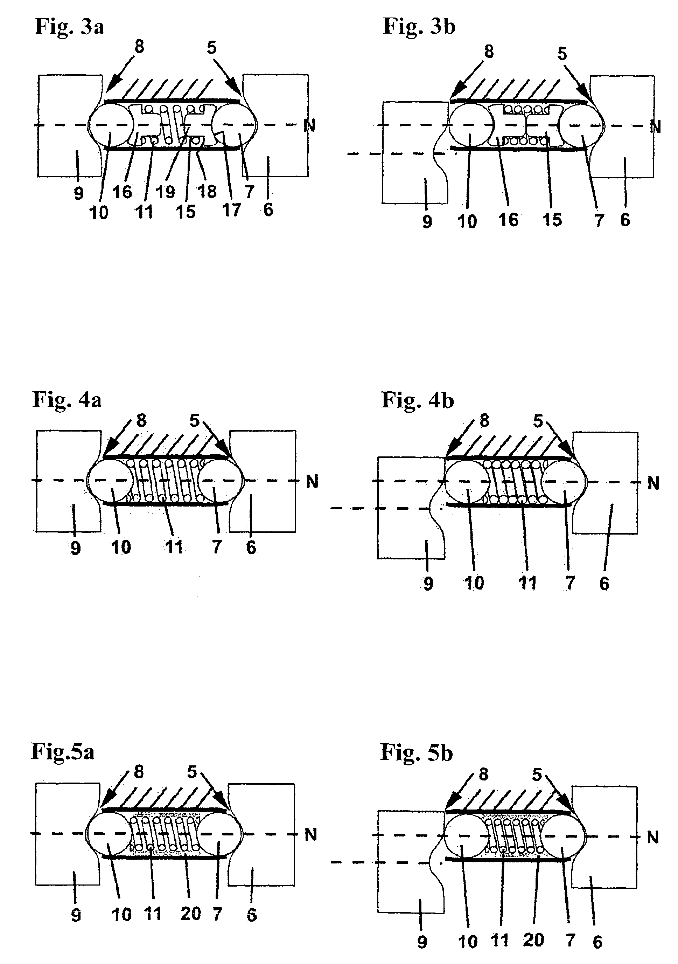

In den Figuren 3 bis 9 werden alternative Vorrichtungen für den ersten und den zweiten Rastmechanismus 5, 8 bzw. für das zwischen den Rastkugeln 7, 10 angeordnete Sperrelement gezeigt. Figur 3a und 3b zeigen in analoger Weise wie die Figuren 1 und 2 den ersten Rastmechanismus 5 und den zweiten Rastmechanismus 8 mit den zugehörigen Rastkonturen 6, 9 und den Rastkugeln 7, 10, wobei sich in Figur 3b der zweite Rastmechanismus 8 und die damit verbundene zweite Schaltgabel 2 (nicht dargestellt) wie in Figur 2 im Synchronpunkt S befindet.

Zwischen den Rastkugeln 7, 10 sind zwei Gleitschuhe 15, 16 angeordnet, die den Sperrstift 12 ersetzen. Der Gleitschuh 15 weist eine der Rastkugel 7 zugewandte Gleitfläche 17 auf, deren Krümmungsradius in etwa dem Radius der Rastkugel 7 entspricht. Auf einer der Rastkugel 7 abgewandten Auflagefläche 18 stützt sich ein stirnseitiges Ende der Schraubenfeder 11 ab. Ein Stift- oder Bolzenteil 19 des Gleitschuhs 15 erstreckt sich in Richtung der Rastkugel 10 und weist einen Durchmesser auf, der einem Innendurchmesser der Windungen der Schraubenfeder 11 entspricht. Der Gleitschuh 16 hat einen zum Gleitschuh 15 analogen Aufbau.

In Fig. 3b ist zu erkennen ist, dass die Gleitschuhe 15, 16 gegenseitig zur Anlage kommen, so dass ein Verschieben der Rastkontur 6 mit der damit verbundenen Schaltgabel 1 (nicht dargestellt) aus ihrer Neutralstellung N nicht möglich ist.

Figur 4 zeigt den ersten Rastmechanismus 5 und den zweiten Rastmechanismus 8, wobei, wie in Figur 4b zu erkennen ist, die Sperrwirkung nicht durch Gleitschuhe oder durch einen Sperrstift, sondern durch die Feder 11 selbst erzeugt wird, die auf Blocklänge zusammengedrückt worden ist. Figur 4 zeigt somit en Ausführungsbeispiel der Erfindung.

Figur 5 unterscheidet sich von Figur 3 dadurch, dass anstelle der Gleitschuhe 15, 16 eine Hülse 20 vorgesehen ist, die einen minimalen Abstand zwischen den Rastkugeln 7, 10 definiert. Der Außendurchmesser der Hülse 20 entspricht etwa dem Innendurchmesser des zylindrischen Gehäuses 13, so dass das Gehäuse 13 die Hülse 20 entsprechend zentriert.

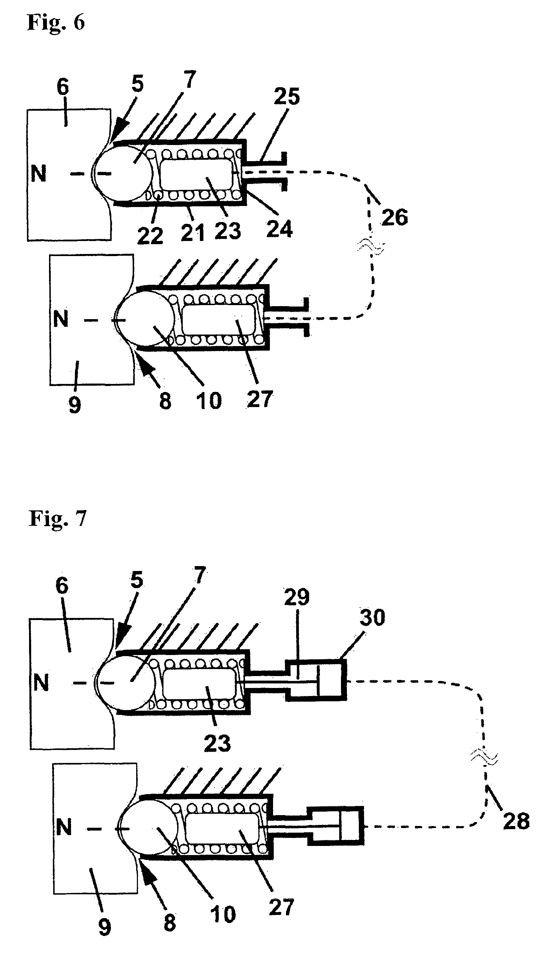

Die Figuren 6 bis 9 zeigen Vorrichtungen, bei denen die Rastkugeln 7, 10 des ersten Rastmechanismus 5 und des zweiten Rastmechanismus 8 nicht in einem gemeinsamen Gehäuse (siehe Figur 1 bis 5: Gehäuse 13) untergebracht sind, sondern räumlich voneinander getrennt sind. Ein dem ersten Rastmechanismus 5 zugeordnetes Gehäuse 21 nimmt die Rastkugel 7, eine Feder 22 und ein Sperrstift 23 auf. An einem der Rastkugel 7 abgewandten Stirnende 24 ist ein Anschluss 25 für ein Bowdenzug 26 vorgesehen, der den Sperrstift 23 und einen Sperrstift 27 des zweiten Rastmechanismus miteinander verbindet. Wird die zweite Schaltgabel 2 mit der ihr zugeordneten zweiten Rastkontur 9 verschoben, drückt die Rastkugel 10 gegen den Sperrstift 27, der über den Bowdenzug 26 den Sperrstift 23 gegen die Rastkugel 7 drückt, die mit der Rastkontur 6 die erste Schaltgabel 1 fixiert.

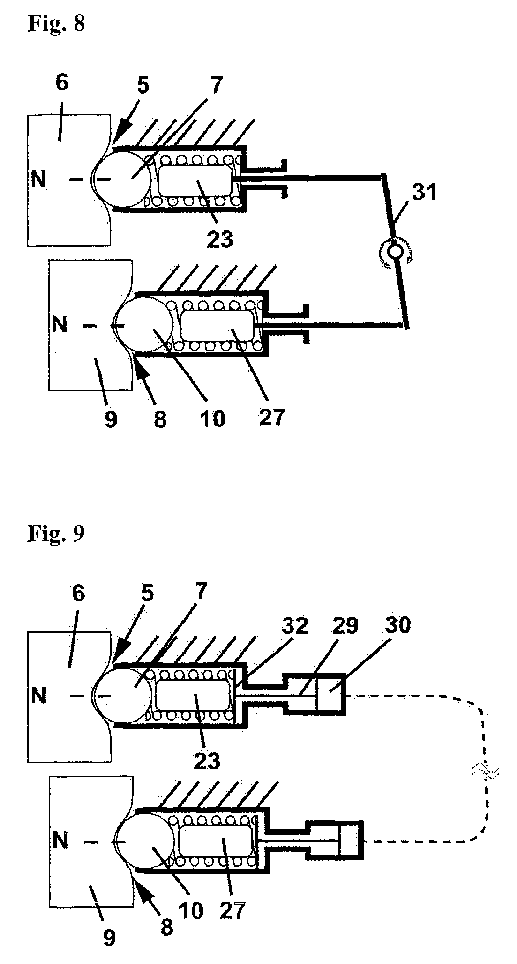

Figur 7 zeigt anstelle des Bowdenzugs 26 eine Hydraulikleitung 28, mit deren Hilfe ein auf ein Sperrstift 23, 27 ausgeübter Druck auf den jeweils anderen Sperrstift 27, 23 übertragen wird. Beispielsweise ist der Sperrstift 23 an einem Kolben 29 befestigt, der eine Hydraulikflüssigkeit aus einem Zylinder 30 in die Hydraulikleitung 28 presst, wenn die erste Rastkontur 8 gegenüber der dargestellten Normalstellung N verschoben wird. Figur 8 zeigt ein Ausführungsbeispiel, bei dem die jeweilige Verschiebung der Sperrstifte 23, 27 durch ein Hebelsystem 31 auf den jeweils anderen Sperrstift übertragen wird.

Die Vorrichtung der Figur 9 unterscheidet sich gegenüber der in Figur 7 dargestellten Vorrichtung dadurch, dass sich die Feder 22 über einen Teller 32 an dem Kolben 29 abstützt. Durch diese Anordnung werden daher nicht nur die Sperrstifte 23, 27 miteinander verbunden, sondern auch die jeweiligen Federn, sodass beispielsweise durch eine zusammengedrückte Feder 22 der Federdruck auf die Rastkugel 10 zunimmt.

Es sei betont, dass die Vorrichtung der Figur 9 anstelle der Hydraulikleitung 28 mit dem Bowdenzug 26 oder dem Hebelsystem 31 versehen sein kann. Auch können anstelle der Sperrstifte 23, 27 Sperrhülsen oder Gleitschuhe verwendet werden, wie sie in den Figuren 3 und 5 dargestellt sind.

### Bezugszeichenliste

- 1: Erste Schaltgabel
- 2: Zweite Schaltgabel
- 3: Schaltstange
- 4: Schaltstange
- 5: Erster Rastmechanismus
- 6: Rastkontur
- 7: Rastelement
- 8: Zweiter Rastmechanismus
- 9: Rastkontur
- 10: Rastelement
- 11: Feder
- 12: Sperrstift
- 13: Gehäuse
- 14: Pfeil
- 15: Gleitschuh
- 16: Gleitschuh
- 17: Gleitfläche
- 18: Auflagefläche
- 19: Bolzenteil
- 20: Sperrhülse
- 21: Gehäuse
- 22: Feder
- 23: Sperrstift
- 24: Stirnende
- 25: Anschluss
- 26: Bowdenzug
- 27: Sperrstift
- 28: Hydraulikleitung
- 29: Kolben
- 30: Zylinder
- 31: Hebelsystem
- 32: Teller
- N: Neutralstellung
- S: Synchronpunkt
- G: Gang

## Patentansprüche

1. Schalteinrichtung für ein mehrgängiges Zahnräderwechselgetriebe eines Kraftfahrzeugs, umfassend eine erste Schaltgabel (1) mit einem ersten Rastmechanismus (5) und wenigstens eine zweite Schaltgabel (2) mit einem zweiten Rastmechanismus (8), wobei der erste und der zweite Rastmechanismus (5, 8) jeweils eine Rastkontur (6, 9) und ein Rastelement (7, 10) aufweisen, wobei eine Feder (11) das Rastelement (7, 10) gegen die Rastkontur (6, 9) drückt, wobei Rastkontur und Rastkörper so zusammenwirken, dass die jeweilige Schaltgabel (1, 2) in eine jeweilige Neutralstellung gezogen wird und in dieser gehalten wird, und wobei zwischen dem Rastelement (7) des ersten Rastmechanismus (5) und dem Rastelement (10) des zweiten Rastmechanismus (7) eine Sperre angeordnet ist, die die erste Schaltgabel (1) über das erste Rastelement (7) in ihrer Neutralstellung fixiert, wenn die zweite Schaltgabel (2) um einen bestimmten Verschiebeweg aus ihrer Neutralstellung heraus bewegt worden ist, **dadurch gekennzeichnet, dass** die Sperre durch eine Blocklänge der Feder (11) definiert wird.

2. Schalteinrichtung nach Anspruch 1, **dadurch gekennzeichnet, dass** eine Neutralhaltekraft, mit der die erste Schaltgabel (1) in ihrer Neutralstellung gehalten wird, von der Position der zweiten Schaltgabel (2) abhängt.

3. Schalteinrichtung nach Anspruch 1 oder 2, **dadurch gekennzeichnet, dass** die Feder als Schraubenfeder (11; 22) ausgebildet ist.

4. Schalteinrichtung nach einem der Ansprüche 1 bis 3, **dadurch gekennzeichnet, dass** zwischen Rastelement (7, 10) und Feder (11) ein Gleitschuh (15, 16) angeordnet ist, an dem sich das Rastelement (7, 10) abstützt.

5. Schalteinrichtung nach einem der Ansprüche 1 bis 4, **dadurch gekennzeichnet, dass** der erste und/oder der zweite Rastmechanismus (5, 8) ein Gehäuse (13; 21) mit einer Halterung umfasst, die das Rastelement (7, 10) in dem Gehäuse (13; 21) hält.

6. Schalteinrichtung nach Anspruch 5, **dadurch gekennzeichnet, dass** das Gehäuse des ersten Rastmechanismus (5) und das Gehäuse des zweiten Rastmechanismus (8) als einstückiges Gehäuse (13) ausgebildet sind.

## Claims

1. Shift device for a multiple-ratio change-speed gearbox of a motor vehicle, comprising a first shift fork (1) with a first detent mechanism (5) and at least one second shift fork (2) with a second detent mechanism (8), wherein the first and second detent mechanisms (5, 8) have in each case one detent contour (6, 9) and one detent element (7, 10), wherein a spring (11) presses the detent element (7, 10) against the detent contour (6, 9), wherein the detent contour and detent body interact such that the respective shift fork (1, 2) is pulled into and held in a respective neutral position, and wherein between the detent element (7) of the first detent mechanism (5) and the detent element (10) of the second detent mechanism (8) there is arranged an interlock which fixes the first shift fork (1) in its neutral position by means of the first detent element (7) when the second shift fork (2) has been moved out of its neutral position by a certain displacement travel, **characterized in that** the interlock is defined by a block length of the spring (11).

2. Shift device according to Claim 1, **characterized in that** a neutral holding force with which the first shift fork (1) is held in its neutral position is dependent on the position of the second shift fork (2).

3. Shift device according to Claim 1 or 2, **characterized in that** the spring is formed as a helical spring (11; 22).

4. Shift device according to one of Claims 1 to 3, **characterized in that** a slide shoe (15, 16) on which the detent element (7, 10) is supported is arranged between the detent element (7, 10) and spring (11).

5. Shift device according to one of Claims 1 to 4, **characterized in that** the first and/or the second detent mechanism (5, 8) comprises a housing (13; 21) with a retainer which holds the detent element (7, 10) in the housing (13; 21).

6. Shift device according to Claim 5, **characterized in that** the housing of the first detent mechanism (5) and the housing of the second detent mechanism (8) are formed as a unipartite housing (13).

## Revendications

1. Dispositif de changement de vitesses pour une boîte de vitesses à engrenages à plusieurs rapports d'un véhicule automobile, comprenant une première fourchette de changement de vitesses (1) avec un premier mécanisme d'encliquetage (5) et au moins une deuxième fourchette de changement de vitesses (2) avec un deuxième mécanisme d'encliquetage (8), le premier et le deuxième mécanisme d'encliquetage (5, 8) présentant chacun un contour d'encliquetage (6, 9) et un élément d'encliquetage (7, 10), un ressort (11) pressant l'élément d'encliquetage (7, 10) contre le contour d'encliquetage (6, 9), le contour d'encliquetage et le corps d'encliquetage coopérant de telle sorte que la fourchette de changement de vitesses respective (1, 2) soit tirée dans une position neutre respective et soit maintenue dans cette position, et entre l'élément d'encliquetage (7) du premier mécanisme d'encliquetage (5) et l'élément d'encliquetage (10) du deuxième mécanisme d'encliquetage (8) étant disposé un verrou qui fixe la première fourchette de changement de vitesses (1) par le biais du premier élément d'encliquetage (7) dans sa position neutre, lorsque la deuxième fourchette de changement de vitesses (2) a été déplacée d'une course de déplacement déterminée hors de sa position neutre, **caractérisé en ce que** le verrou est défini par une longueur à bloc du ressort (11).

2. Dispositif de changement de vitesses selon la revendication 1, **caractérisé en ce qu'**une force de maintien neutre, avec laquelle la première fourchette de changement de vitesses (1) est maintenue dans sa position neutre, dépend de la position de la deuxième fourchette de changement de vitesses (2).

3. Dispositif de changement de vitesses selon la revendication 1 ou 2, **caractérisé en ce que** le ressort est réalisé sous forme de ressort à boudin (11 ; 22).

4. Dispositif de changement de vitesses selon l'une quelconque des revendications 1 à 3, **caractérisé en ce qu'**entre l'élément d'encliquetage (7, 10) et le ressort (11) est disposé un sabot coulissant (15, 16) sur lequel s'appuie l'élément d'encliquetage (7, 10).

5. Dispositif de changement de vitesses selon l'une quelconque des revendications 1 à 4, **caractérisé en ce que** le premier et/ou le deuxième mécanisme d'encliquetage (5, 8) comprennent un boîtier (13 ; 21) avec une fixation qui retient l'élément d'encliquetage (7, 10) dans le boîtier (13 ; 21).

6. Dispositif de changement de vitesses selon la revendication 5, **caractérisé en ce que** le boîtier du premier mécanisme d'encliquetage (5) et le boîtier du deuxième mécanisme d'encliquetage (8) sont réalisés sous forme d'un seul boîtier unitaire (13).
